# EUROPEAN PATENT APPLICATION

(11) **EP 2 416 576 A2**
(43) Date of publication of application: **08.02.2012**
(21) Application number: 11176307.4
(22) Date of filing: 02.08.2011
(51) Int. Cl.: H04N 9/31, G03B 21/00

(54) **Video projector**

(30) Priority: 06.08.2010 JP 2010177385
(71) Applicant: SANYO ELECTRIC CO., LTD., Moriguchi-shi, Osaka 570-8677 (JP)
(72) Inventor: Kotani, Kazunori, Moriguchi-shi, Osaka 570-8677 (JP); Kazumori, Hirofumi, Moriguchi-shi, Osaka 570-8677 (JP)
(74) Representative: Glawe, Delfs, Moll

(57) **Abstract**

A video projector including light source lamps (11-14) and a cooling fan (50), which cools the light source lamps (11-14). A memory unit (62) stores a reference time (ts) set for each of the light source lamps (11-14). The reference time (ts) indicates the time required for the corresponding light source lamp to be cooled, after being deactivated, to the reference temperature (Tc) or less. A notification unit (63) generates a notification for each of the light source lamps (11-14) indicating that the light source lamp is replaceable. An elapsed time (t) from when each of the light source lamps (11-14) is switched from an activated state to a deactivated state is compared with a corresponding reference time (ts). When the elapsed time (t) exceeds the corresponding reference time (ts), the notification unit (63) generates the notification related to the corresponding light source lamp.

## Description

The present invention relates to a video projector, and more particularly, to a video projector that includes a cooling fan for cooling a light source lamp.

In general, a video projector uses a high-intensity lamp, such as a metal halide lamp, as a light source lamp. The temperature of such type of lamp increases during use. Thus, when the lamp burns out and one immediately attempts to replace the lamp with a new one, he or she may get a burn. This necessitates the employment of a safety device. Japanese Laid-Open Patent Publication No. 2006-145579 describes such a safety device. In the prior art, a cooling fan is operated for a predetermined time when the light source lamp burns out to cool the light source lamp. The light source lamp is accommodated in a compartment closed by a locked door. A temperature detection unit detects the air temperature of the compartment near the light source lamp. When the air temperature becomes less than or equal to a reference temperature, the door is unlocked by an unlock mechanism.

A considerable amount of time is required for the interior of the light source lamp to cool. As a result, the interior of the light source lamp may still be hot even though the current of cooling air from the cooling fan lowers the air temperature near the light source lamp. Thus, the device of the prior art checks again whether or not the temperature detected by the temperature detection unit is greater than the reference temperature when a predetermined period elapses after stopping the cooling fan. When the detection temperature is still greater than the reference temperature, the cooling fan is operated again for a predetermined period. In this manner, the device of the prior art repeats the same cooling process until determining that the entire light source lamp including its interior has become cool.

With regard to video projectors, there is a tendency for each product using a plurality of light source lamps to answer the demand for higher luminance. In such a product that uses a plurality of light source lamps, when one or more of the lamps burn out, it is desirable that the projector continuously projects images using the non-burned out lamps. When applying the safety device of the prior art to a video projector that uses a plurality of light source lamps, a temperature detection unit must be prepared for each light source lamp. This results in an inevitable increase in circuit scale, cost, and volume for a video projector that uses a plurality of light source lamps. Further, it is difficult to arrange each temperature detection unit without being affected by the heat generated by other light source lamps. Thus, accurate temperature detection may be difficult. Moreover, the safety device of the prior art does not include a notification means that notifies a user that the temperature has decreased and replacement of a light source lamp is possible.

One embodiment of the present invention is a video projector including a plurality of light source lamps, a cooling fan that cools the light source lamps, and a memory unit that stores a reference time set for each of the light source lamps. The reference time indicates time required for the corresponding one of the light source lamps to be cooled, after being deactivated, to the reference temperature or less. A notification unit generates a notification for each of the light source lamps indicating that a corresponding light source lamp is replaceable. An elapsed time from when each of the light source lamps is switched from an activated state to a deactivated state is compared with a corresponding reference time. When the elapsed time exceeds the corresponding reference time, the notification unit generates the notification related to the corresponding light source lamp.

A further embodiment of the present invention is a method for controlling cooling of a plurality of light source lamps arranged in a video projector. The method includes storing a reference time in a memory unit. The reference time indicates time required for each of the light source lamp to be cooled, after being deactivated, to a reference temperature or less, and the reference time is set for each of the light source lamps. The method also includes comparing an elapsed time from when each of the light source lamps switches from an activated state to a deactivated state with the corresponding reference time, and generating a notification when the elapsed time exceeds the corresponding reference time. The notification indicates that the corresponding light source lamp is replaceable.

Other embodiments and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a schematic block diagram showing a structure of a video projector according to one embodiment of the present invention;
Fig. 2 is a graph showing the influence of pressure on reference time in a notification system of the video projector of Fig. 1;
Fig. 3 is a table showing the reference time when using the data of Fig. 2; and
Fig. 4 is a flowchart used by the notification system in the video projector of Fig. 1.

A video projector according to one embodiment of the present invention will now be described with reference to the drawings.

Although not specifically illustrated, the video projector according to the present embodiment is a three-chip type liquid crystal video projector.

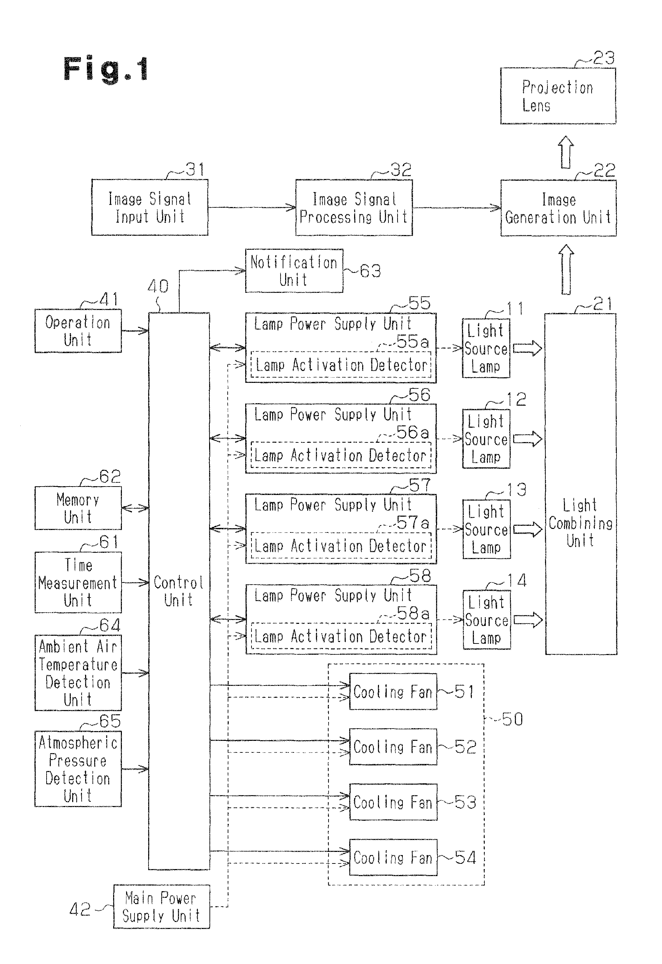

As shown by the function blocks in Fig. 1, an optical system, which is used to display images, in the video projector includes four light source lamps 11 to 14. The optical system of the video projector also includes a light combining unit 21, which combines light emitted from the light source lamps 11 to 14, an image generation unit 22, which generates image light using the combined light, and a projection lens 23, which projects the generated image light.

The four light source lamps 11 to 14 are each formed by a discharge lamp, such as an ultra-high pressure mercury lamp or a metal halide lamp, and lighted when displaying an image. The light emitted from the lighted light source lamps 11 to 14 enter the light combining unit 21 to be combined.

The light combining unit 21 is formed by an optical component that combines the light emitted from the light source lamps 11 to 14 to show an entire image with the light source lamps 11 to 14. The light combined by the light combining unit 21 enters the image generation unit 22.

The image generation unit 22 separates the light combined by the light combining unit 21 into red light, green light, and blue light. Then, the image generation unit 22 performs light modulation on the color-separated light with a liquid crystal light valve for the light of each color based on an image signal, which will be described later. The image generation unit 22 also combines the modulated light of each color with a cross dichroic prism to generate colored image light.

The projection lens 23 is a lens device including a group of lenses that project the image light generated by the image generation unit 22. When the color image light is projected out of the projector from the projection lens 23, an image is displayed on a flat surface, such as a screen or a wall.

In the present embodiment, the video projector further includes an image signal input unit 31 and an image signal processing unit 32 that generate an image based on an image signal, which is an electrical signal. The image signal input unit 31 receives an image signal from an external device. The image signal processing unit 32 performs signal processing on the image signal.

The image signal input unit 31 includes an image signal input terminal, which is connected to an image cable and receives image signals from various types of external devices. Further, the image signal input unit 31 includes an input interface, such as analog I/F, digital I/F, and video I/F, which are applicable to various types of image signals from various types of image reproduction devices, such as an analog PC, a digital PC, a video recorder, and a television. An image signal input to the image signal input unit 31 undergoes processing such as A/D conversion and decoding and is converted into a digital signal, which is output to the image signal processing unit 32.

The image signal processing unit 32 performs image processing on the input image signal, such as scaling, gamma correction, and luminance correction. The processed image signal is then provided to the image generation unit 22.

In the present embodiment, the video projector includes a control unit 40, an operation unit 41, and a main power supply unit 42. These units are used to control the general operation of the video projector.

The control unit 40 exchanges signals with other units and controls each unit so that the video projector entirely operates without any problems.

The user uses the operation unit 41 to operate the video projector. The operation unit 41 may be an operation switch, a key, a remote controller, an external computer, or the like. The control unit 40 processes the information input to the operation unit 41 and transmits operation contents to each control unit 40 when necessary for execution.

The main power supply unit 42 receives AC power from an external power supply and performs processing, such as transformation, rectification, and smoothing with an incorporated AC/DC converter, to generate stable DC voltage. Then, the main power supply unit 42 and supplies each unit with the DC voltage as drive power and control power.

In the present embodiment, the video projector includes a notification system to notify the user that the light source lamps 11 to 14 have been cooled for a predetermined period after deactivation of the light source lamps 11 to 14 and are in condition for replacement. In addition to the control unit 40, which is required to control the general operation of the video projector, the operation unit 41, and the main power supply unit 42, the notification system further includes cooling fans 51 to 54, which cool the light source lamps 11 to 14, lamp power supply units 55 to 58, a time measurement unit 61, a memory unit 62, a notification unit 63, an ambient air temperature detection unit 64, and an atmospheric pressure detection unit 65.

The cooling fans 51 to 54 generate currents of cooling air that cool the light source lamps 11 to 14 when the lamps 11 to 14 are activated or lighted, and after the lamps 11 to 14 are deactivated. In this embodiment, one of the cooling fans 51 to 54 is dedicated to each of the light source lamps 11 to 14. The control unit 40 controls the operation of the cooling fans 51 to 54.

One of the lamp power supply units 55 to 58 is independently arranged for each of the light source lamps 11 to 14. The lamp power supply units 55 to 58 convert the DC voltage supplied from the main power supply unit 42 into voltage having a suitable waveform for driving the corresponding light source lamps 11 to 14. The lamp power supply units 55 to 58 also output a voltage having a suitable waveform for each operation, such as when the light source lamp 11 to 14 are first activated or operated in a normal state, based on a control signal from the control unit 40. The lamp power supply units 55 to 58 respectively include lamp activation detectors 55a to 58a that detect the activation state of the corresponding light source lamps 11 to 14. When the lamp activation detectors 55a to 58a detect deactivation of the corresponding light source lamps 11 to 14, the lamp activation detectors 55a to 58a output a deactivation detection signal to the control unit 40. Here, the term deactivation includes a case when a lamp failure occurs due to the lamp life or the like and also a case in which the user intentionally operates the operation unit 41 to deactivate the light source lamps 11 to 14.

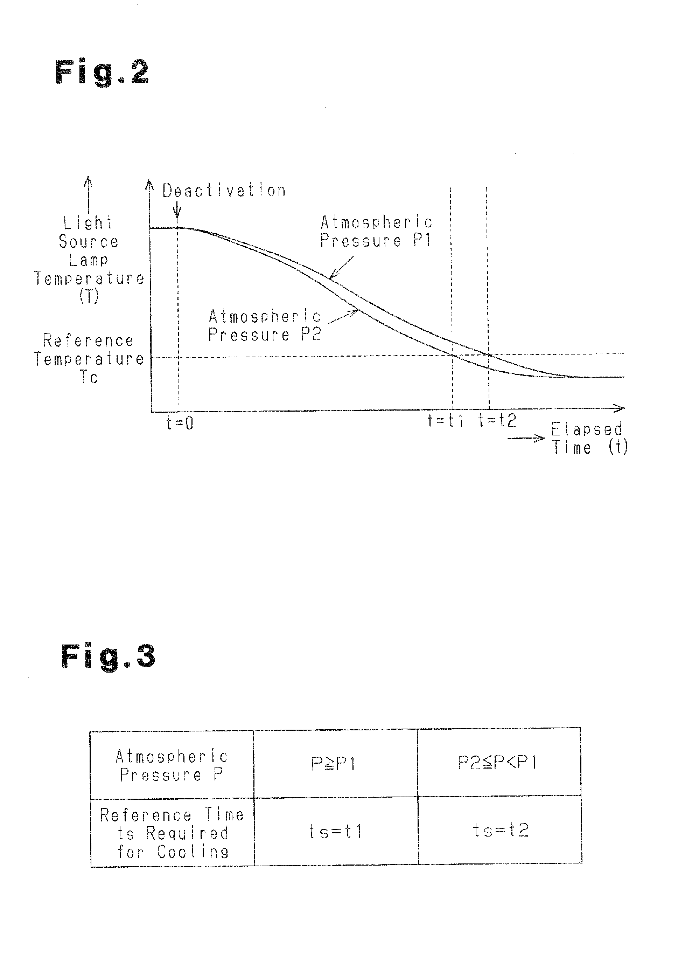

When receiving a detection signal indicating deactivation of the light source lamps 11 to 14 from the lamp activation detectors 55a to 58a, the control unit 40 notifies the time measurement unit 61 that the light source lamps 11 to 14 have been deactivated and outputs a control signal instructing the time measurement unit 61 to start the measurement of an elapsed time t from when the light source lamps 11 to 14 are deactivated. The control unit 40 receives the elapsed time t, which is measured from when each of the light source lamps 11 to 14 is deactivated with the time measurement unit 61, transmits the information of the elapsed time t to the memory unit 62, and updates the elapsed time t, stored in the memory unit 62, after deactivation of each of the light source lamps 11 to 14. Further, the control unit 40 compares the updated elapsed time t after deactivation with a reference time ts in constant cycles for each light source lamp 11 to 14. The reference time ts is set in advance as the time required to cool each light source lamp 11 to 14 and stored in advance in the memory unit 62. Here, the reference time ts refers to the time required for the light source lamps 11 to 14 from when the light source lamps 11 to 14 are deactivated to cool and decrease the temperature T to a reference temperature Tc (refer to Figs. 2 and 3). The cooling fans 51 to 54 are operated during the period satisfying the condition of reference time ts ≥ elapsed time t. When the elapsed time t exceeds the reference time ts, the control unit 40 stops the cooling fans 51 to 54 and sends a control signal indicating that the elapsed time t has exceeded the reference time ts to the notification unit 63. The temperature T is the surface temperature of each of the light source lamps 11 to 14.

The time measurement unit 61 measures the elapsed time t from when each of the light source lamps 11 to 14 is deactivated. Then, the time measurement unit 61 sends the measured elapsed time t to the control unit 40.

The memory unit 62, which is formed by a ROM or a RAM memory, updates and stores the elapsed time t from when each of the light source lamps 11 to 14 is deactivated. The elapsed time t is received from the control unit 40. The memory unit 62 also stores the reference time ts, which is set in advance as described above.

The notification unit 63 notifies the user of the temperature state of the light source lamps 11 to 14 subsequent to deactivation based on a control signal from the control unit 40. In this example, the notification unit 63 notifies the user of the temperature state of the lamps 11 to 14 when receiving a control signal indicating that the lamps 11 to 14 have been deactivated. The notification unit 63 also notifies the user of the temperature state of the lamps 11 to 14 when receiving a control signal indicating that the elapsed time t from when each of the light source lamps 11 to 14 is deactivated has exceeded the reference time ts. The notification unit 63 includes notification lamps such as LEDS (light emitting diodes). In this case, notification LEDs of different colors may be used to indicate the two types of notifications for each of the lamps 11 to 14. Alternatively, the lighting method of the notification unit 63 may be reversed. The method for illuminating the notification unit 63 may be, for example, from continuous illumination to flashing or vice versa to distinguish between different states of the lamps 11 to 14. Further, notification lamps may be arranged near lids, which are opened to replace corresponding light source lamps 11 to 14. Notification lamps may be arranged in density on a specially set display unit, for example.

In addition to the notifications described above, the notification unit 63 may notify the user that the lamp life term has expired when the cumulative activation time of each of the light source lamps 11 to 14 exceeds a predetermined time. In this manner, for each of the light source lamps 11 to 14, the user is notified of three types of information, namely, life term expiration of the lamp, deactivation of the lamp, and state allowing for replacement of the deactivated lamp. This improves convenience.

The user can be notified of different information by switching the notification method between slow flashing, fast flashing, and continuous illumination.

The cumulative activation time of each of the light source lamp 11 to 14 is stored in the memory unit 62. Further, the cumulative activation time of each of the light source lamps 11 to 14 is updated by measuring the activation time of each lamp with the time measurement unit 61 and adding the measured activation time to the cumulative activation time stored in the memory unit 62 in constant cycles.

In the comparison of the reference time ts and the elapsed time t, a separate variable is stored as the elapsed time t for each of the light source lamps 11 to 14. Further, the light source lamps 11 to 14 simultaneously undergo the comparison.

Further, in the comparison of the reference time ts and the elapsed time t, the reference time ts is varied in accordance with a physical amount (physical condition) that affects the temperature decrease of the light source lamps 11 to 14. Examples of such physical amounts include the ambient air temperature of the video projector, the atmospheric pressure P of the location of the video projector, and cooling conditions at the positions of the light source lamps 11 to 14 in the video projector. In this embodiment, the reference time ts is determined for each of the light source lamps 11 to 14. The ambient air temperature of the video projector is detected by the ambient air temperature detection unit 64, and the atmospheric pressure P is detected by the atmospheric pressure detection unit 65. The control unit 40 is configured to correct the reference time ts, which is stored in the memory unit 62, with the detected ambient air temperature and atmospheric pressure P.

The ambient air temperature of the video projector greatly affects the cooling speed of the light source lamp 11 to 14. In the present embodiment, the reference time ts stored in the memory unit 62 is automatically corrected by the ambient air temperature detected by the ambient air temperature detection unit 64 based on a table stored in advance in the memory unit 62. The ambient air temperature detection unit 64 is shared by the light source lamps 11 to 14.

The atmospheric pressure P at the location of the video projector may greatly affect the cooling time subsequent to deactivation of the light source lamps 11 to 14. In other words, the density of air, which serves as a cooling medium, is changed by the atmospheric pressure P. The density of air decreases as the atmospheric pressure P decreases. Thus, when the atmospheric pressure P decreases and the cooling fans 51 to 54 rotate at a constant speed, the cooling effect of the light source lamps 11 to 14 is lowered. This prolongs the time required for cooling. When the atmospheric pressure P is low, the rotation speed of the cooling fans 51 to 54 may be increased. However, this would increase the noise of the cooling fans 51 to 54. Accordingly, in the present embodiment, the reference time ts is varied in accordance with the atmospheric pressure P.

Figs. 2 and 3 are referred to when determining the reference time ts. Fig. 2 shows an example of temperature change relative to the elapsed time t near the light source lamps 11 to 14 for different atmospheric pressures P1 and P2 (P1 >P2). As shown in this example, when the cooling fans 51 to 54 are operating at the same rotation speed, a high atmospheric pressure P1 lowers the temperature T of the light source lamp 11 to 14 to the reference temperature Tc more quickly than a low atmospheric pressure P2. In this case, by setting the reference time ts as shown in Fig. 3, cooling is performed until reaching the same temperature even when the atmospheric pressure P is different. In Fig. 2, the point corresponding to t=0 indicates the time when the light source lamps 11 to 14 are deactivated. Further, by setting the value of the atmospheric pressure P2 as a reference value for determining whether or not the operational environment of the video projector is appropriate, the video projector may be controlled to stop operating when P<P2 is satisfied.

In the present embodiment, as described above, the reference time ts is corrected by the atmospheric pressure P, which is detected by the atmospheric pressure detection unit 65, based on the table stored in advance in the memory unit 62. The atmospheric pressure detection unit 65 is shared by the light source lamps 11 to 14.

Preferably, the reference time ts for each of the light source lamps 11 to 14 is set to a different time in accordance to the cooling conditions where the light source lamps 11 to 14 are arranged in the video projector. When installing the light source lamps 11 to 14, it is physically impossible to install all of the light source lamps 11 to 14 under the same cooling conditions. For instance, the video projector includes area where cooling air easily flows and areas where the flow of cooling air is relatively stagnant. Areas where cooling air easily flows have satisfactory cooling conditions and allow the reference time ts to be shortened. In contrast, areas where the flow of cooling air is relatively stagnant have unsatisfactory cooling conditions and result in a prolonged reference time ts. Thus, each of the light source lamps 11 to 14 preferably has a different reference time ts. The preferable reference time ts differs depending on design factors such as structure and function. Hence, the reference time ts for each of the light source lamps 11 to 14 is adjusted before the video projector is shipped out of the factory.

The cooling conditions related to the location of each of the light source lamps 11 to 14 changes in accordance with the orientation of the video projector determined by the projection direction. More specifically, heat is easily transmitted upward by the conduction of heat and convection of air. Thus, the cooling conditions change when the orientation of the video projector changes. In this case, the cooling conditions are also defined by the design specification of the video projector. Thus, a correction coefficient is stored in advance in the memory unit 62 in accordance with the orientation of the video projector, that is, the orientation of each of the light source lamps 11 to 14. Accordingly, when the orientation of the video projector is set during installation, the reference time ts is automatically adjusted. Alternatively, the set orientation is input during installation to adjust the reference time ts. Further, a sensor that detects inclination such as an acceleration sensor or the like (not shown) may detect the orientation of the video projector and automatically provide the detection result to the control unit 40.

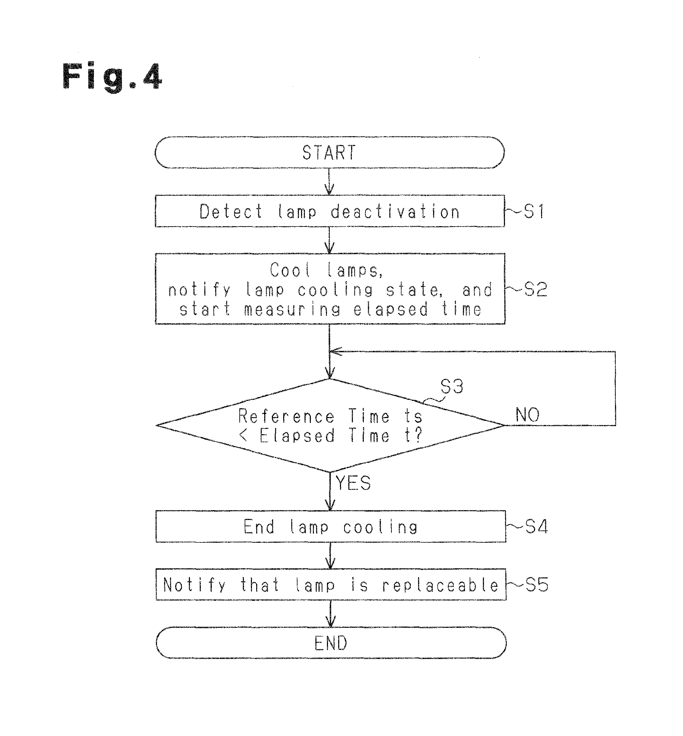

The process for notifying the user of the timing for replacing the light source lamps 11 to 14 in the video projector will now be described with reference to the flowchart of Fig. 4. The program related to this process is stored in the memory unit 62.

When the light source lamp 11 to 14 in the video projector is deactivated for one reason or another, by an intentional deactivation or operation failure, the lamp activation detectors 55a to 58a of the lamp power supply units 55 to 58 detect deactivation of the corresponding light source lamps 11 to 14 and send a lamp deactivation control signal to the control unit 40 (step S1). The reason and timing for deactivation differs between the light source lamps 11 to 14. The process described here is the same for each of the light source lamps 11 to 14.

The control unit 40 drives the cooling fans 51 to 54 based on the lamp deactivation control signal and notifies the user as to whether a light source lamp 11 to 14 is deactivated with an indication, or signal, by the notification unit 63 (step S2). Further, the time measurement unit 61 starts measuring the elapsed time t after deactivation of any of the light source lamps 11 to 14 (step S2). In this stage, the notification unit 63 notifies the user whether any of the lamps are deactivated but still hot.

The control unit 40 then compares the elapsed time t measured by the time measurement unit 61 with the reference time ts in constant cycles (step S3). In this case, during a period in which reference time ts ≥ elapsed time t is satisfied (NO in step S3), the cooling fans 51 to 54 are continuously operated. When reference time ts < elapsed time t is satisfied, the cooling fans 51 to 54 stop operating (YES in step S3 → step S4). Then, the notification unit 63 notifies the user that light source lamps 11 to 14 have been cooled to the reference temperature Tc. The notification in this stage indicates that the lamps may be replaced. As described above, the reference time ts is adjusted in accordance with the ambient air temperature and the atmospheric pressure P. Further, the reference time ts is corrected for each of the light source lamps 11 to 14 by the cooling conditions and the projection state. This completes the processing performed before the indication that the lamps can be replaced.

In the present embodiment, the video projector has the advantages described below.

(1) The elapsed time t from when each of the light source lamps 11 to 14 is switched from an activated state to a deactivated state is compared with the corresponding reference time ts, which is stored in advance. When the elapsed time t exceeds the reference time ts, the notification unit 63 generates a notification indicating that the corresponding light source lamp is replaceable. Thus, the notification unit 63 notifies the user of the replaceable timing for each of the light source lamps 11 to 14. Accordingly, there is no need to arrange a plurality of temperature detection units in correspondence with a plurality of light source lamps like in the prior art. In the present embodiment, the notification of the replaceable timing of each of the light source lamps 11 to 14 is achieved by modifying a control circuit or control software. This allows notification of the timing at which a lamp becomes replaceable without increasing the circuit scale, cost, and volume.

(2) The reference time ts is automatically corrected in correspondence with the ambient air temperature of the video projector that affects the decrease in the temperature of the light source lamps 11 to 14. Accordingly, the user is always appropriately notified of the timing for lamp replacement in correspondence with changes in the ambient air temperature.

(3) When air is used for cooling, a decrease in the atmospheric pressure P decreases the density of air and lowers the cooling effect. The reference time ts is thus adjusted according to the atmospheric pressure P. Accordingly, the user is notified of the appropriate lamp replacement timing without any problem even in mountainous regions where the atmospheric pressure P is low.

(4) The reference time ts is corrected for each of the light source lamps 11 to 14 taking into consideration differences in the cooling condition resulting from the positions of the light source lamps 11 to 14. Accordingly, the user is notified of the appropriate lamp replacement changing timing that takes into consideration differences in the cooling condition resulting from the positions of the light source lamps 11 to 14 in the video projector.

(5) The reference time ts is adjusted in accordance with the orientation of the video projector. The difference in cooling condition resulting from the positions of the light source lamp 11 to 14 changes in accordance with the orientation of the video projector. Accordingly, the user is notified of the appropriate lamp replacement changing timing that takes into consideration the influence of the orientation of the video projector.

It should be apparent to those skilled in the art that the present invention may be embodied in many other specific forms without departing from the spirit or scope of the invention. Particularly, it should be understood that the present invention may be embodied in the following forms.

In the embodiment described above, the cooling fans 51 to 54 are arranged in correspondence with the light source lamps 11 to 14. However, the present invention is not limited to such a structure. For example, a common cooling fan may be shared by all or some of the light source lamps 1 1 to 14. For example, as shown by a dashed line in Fig. 1, a single cooling fan 50 may be shared by all of the light source lamps 11 to 14.

The notification unit 63 was described as being formed by notification lamps, which may be LEDs. Instead, a liquid crystal display (LCD), which is formed by a liquid crystal display element, may be used to simultaneously display the state of the light source lamps 11 to 14. Further, when using an LCD in such a manner, the user may be notified of the cooling state of the light source lamps 11 to 14 in a manner easy to understand by combining colors and characters.

In the embodiment described above, the cooling fans 51 to 54 are immediately stopped when the elapsed time t exceeds the reference time ts. However, the present invention is not limited in such a manner. For example, the cooling fans 54 may further continue to operate for a certain time from when it becomes apparent that the elapsed time t exceeded the reference time ts. This further ensures cooling of the light source lamps 11 to 14.

In the embodiment described above, the ambient air temperature and the atmospheric pressure P at the installation location are detected by the detection units 64 and 65, and the reference time ts is automatically corrected. However, the user may input the information related to the ambient air temperature and the atmospheric pressure P, and the reference time ts may be corrected based on the input information.

In the embodiment described above, a so-called three-chip type liquid crystal video projector that uses a liquid crystal panel as the light modulation element is used as the video projector. However, the present invention is not limited in such a manner, and a projector including another type of image light generation system may be used. The present invention may be applied to a Digital Light Processing (DLP, registered trademark of Texas Instruments Incorporated) type projector.

The video projector according to the present invention may be used as an image display system for various types of facilities. For example, the video projector may be used in a home theater, conference room, training room, classroom, recreation room, exhibition room, and studio.

The present examples and embodiments are to be considered as illustrative and not restrictive, and the invention is not to be limited to the details given herein, but may be modified within the scope and equivalence of the appended claims.

## Claims

1. A video projector **characterized by** compr ising:
a plurality of light source lamps (11-14);
a cooling fan (50) that cools the light source lamps;
a memory unit (62) that stores a reference time (ts) set for each of the light source lamps (11-14), wherein the reference time (ts) indicates time required for the corresponding one of the light source lamps to be cooled, after being deactivated, to the reference temperature (Tc) or less; and
a notification unit (63) that generates a notification for each of the light source lamps (11-14) indicating that a corresponding light source lamp is replaceable, wherein
an elapsed time (t) from when each of the light source lamps (11-14) is switched from an activated state to a deactivated state is compared with a corresponding reference time (ts), and
when the elapsed time (t) exceeds the corresponding reference time (ts), the notification unit (63) generates the notification related to the corresponding light source lamp.

2. The video projector according to claim 1, **characterized in that** the reference time (ts) is adjustable in accordance with a physical condition that affects a decrease in temperature of the light source lamps.

3. The video projector according to claim 2, further **characterized by** comprising an ambient air temperature detection unit (64) that detects ambient air temperature of the video projector as the physical condition, wherein the reference time (ts) is corrected in accordance with the ambient air temperature detected by the ambient air temperature detection unit (64).

4. The video projector according to claim 2, further **characterized by** comprising an atmospheric pressure detection unit (65) that detects atmospheric pressure at a location where the video projector is installed as the physical condition, wherein the reference time (ts) is corrected in accordance with the atmospheric pressure detected by the atmospheric pressure detection unit (65).

5. The video projector according to claim 2, **characterized in that**
the physical condition includes a cooling condition at positions where the light source lamps (11-14) are located, and
the reference time (ts) is adjusted for each of the light source lamps in accordance with the position of each of the light source lamps (11-14).

6. The video projector according to claim 2, **characterized in that**
the physical condition includes a cooling condition at positions where the light source lamps (11-14) are located and an installation state of the video projector, and
the reference time (ts) is adjusted for each of the light source lamps in accordance with the positions of the light source lamps (11-14) that correspond to the installation state.

7. The video projector according to any of claims 1 to 6, **characterized in that** the cooling fan (50) continues to operate for a certain time from when the elapsed time (t) exceeds the corresponding reference time (ts).

8. The video projector according to any of claims 1 to 7, **characterized in that** the notification unit (63) includes light emitting diodes.

9. The video projector according to any of claim 1 to 7, **characterized in that** the notification unit (63) includes a liquid crystal display.

10. The video projector according to any of claims 1 to 7, **characterized in that** the notification unit (63) generates a notification indicating a state in which the light source lamps (11-14) are deactivated but still hot and a notification indicating a state in which the light source lamps (11-14) are cooled to the reference temperature (Tc).

11. A method for controlling cooling of a plurality of light source lamps (11-14) arranged in a video projector, the method **characterized by** comprising:
storing a reference time (ts) in a memory unit (62), wherein the reference time (ts) indicates time required for each of the light source lamps (11-14) to be cooled, after being deactivated, to a reference temperature (Tc) or less, and the reference time (ts) is set for each of the light source lamps (11-14);
comparing an elapsed time (t) from when each of the light source lamps (11-14) switches from an activated state to a deactivated state with the corresponding reference time (ts); and
generating a notification when the elapsed time (t) exceeds the corresponding reference time (ts), wherein the notification indicates that the corresponding light source lamp is replaceable.
